# EUROPÄISCHE PATENTANMELDUNG

(11) **EP 3 372 067 A1**
(43) Veröffentlichungstag der Anmeldung: **12.09.2018**
(21) Anmeldenummer: 18160059.4
(22) Anmeldetag: 05.03.2018
(51) Int. Cl.: A01F 25/16

(54) **SILOABDECKSYSTEM UND SILO**

(30) Priorität: 09.03.2017 DE 202017101355 U
(71) Anmelder: Arnegger, Andreas, 88299 Leutkirch (DE)
(72) Erfinder: Arnegger, Andreas, 88299 Leutkirch (DE)
(74) Vertreter: Pfister & Pfister Patent- und Rechtsanwälte

(57) **Zusammenfassung**

Die Erfindung betrifft ein Siloabdecksystem (10), aufweisend eine Abdeckplane (20), welche dazu ausgebildet ist, einen Silo, insbesondere einen Flachsilo oder Fahrsilo, abzudecken, eine Rolle (30), an welcher die Abdeckplane (20) lösbar befestigt ist, um die Abdeckplane (20) auf- und abzurollen, und ein Gestell (40), in welchem die Rolle (30) drehbar gelagert ist, wobei das Gestell (40) zumindest ein Auflageelement (42) zum Ablegen des Gestells (40) auf einem Untergrund neben dem Silo aufweist, und wobei das Gestell (40) ein Befestigungselement (50) zum lösbaren Befestigen des Gestells (40) an einem Nutzfahrzeug aufweist.

## Beschreibung

Die Erfindung betrifft ein Siloabdecksystem sowie einen Silo mit einem solchen Siloabdecksystem.

Silos dienen typischerweise der Lagerung und Konservierung von Futtermitteln für die Landwirtschaft. Heutzutage werden diese meistens als Flachsilos oder Fahrsilos ausgeführt, wobei beispielsweise eine Fläche mit einer Ausdehnung vom mehreren Quadratmetern vorgesehen wird, welche von einer betonierten Mauer umrandet ist. Auf dieser Fläche werden dann nach der Ernte Futtermittel gelagert, welche sukzessive entnommen werden können.

Um ein Verderben der Futtermittel zu verhindern, wird ein Silo typischerweise mit einer Abdeckplane abgedeckt. Diese kann beispielsweise das Eindringen von Feuchtigkeit verhindern und auch den Luftaustausch unterbinden.

Das Aufbringen derartiger Abdeckplanen hat sich in der Vergangenheit als aufwändig herausgestellt, da es üblicherweise manuell erfolgt und nach dem Aufbringen der Abdeckplane eine Sicherung mit Autoreifen oder anderen schweren Gegenständen nötig ist.

Es ist deshalb eine Aufgabe der Erfindung, ein Siloabdecksystem bereitzustellen, mittels welchem ein Silo einfacher abgedeckt werden kann. Es ist des Weiteren eine Aufgabe der Erfindung, einen Silo mit einem solchen Siloabdecksystem bereitzustellen.

Dies wird erfindungsgemäß durch ein Siloabdecksystem sowie einen Silo gemäß den jeweiligen Hauptansprüchen erreicht. Vorteilhafte Ausgestaltungen können beispielsweise den jeweiligen Unteransprüchen entnommen werden. Der Inhalt der Ansprüche wird durch ausdrückliche Inbezugnahme zum Inhalt der Beschreibung gemacht.

Die Erfindung betrifft ein Siloabdecksystem.

Das Siloabdecksystem weist eine Abdeckplane auf, welche dazu ausgebildet ist, einen Silo, insbesondere einen Flachsilo oder Fahrsilo, abzudecken. Das Siloabdecksystem weist auch eine Rolle auf, an welcher die Abdeckplane lösbar befestigt ist, um die Abdeckplane auf- und abzurollen. Außerdem weist das Siloabdecksystem ein Gestell auf, in welchem die Rolle drehbar gelagert ist.

Das Gestell weist zumindest ein Auflageelement zum Ablegen des Gestells auf einem Untergrund neben dem Silo auf. Außerdem weist das Gestell ein Befestigungselement zum lösbaren Befestigen des Gestells an einem Nutzfahrzeug auf.

Mittels des erfindungsgemäßen Siloabdecksystems kann die Abdeckplane einfach unter Verwendung eines Nutzfahrzeugs ausgebracht werden. Das Gestell kann nach dem Ausbringen der Abdeckplane neben dem Silo abgestellt werden. Ein Abrollen oder Aufrollen kann durch einfaches Drehen der Rolle erfolgen. Durch das Gewicht der Rolle oder des Gestells kann für eine hohe Stabilität ohne zusätzliche Elemente gesorgt werden.

Die Abdeckplane kann dabei insbesondere derart ausgebracht werden, dass mit einem Nutzfahrzeug, an welchem das Gestell befestigt ist, über den Silo gefahren wird und die Abdeckplane dabei abgewickelt wird. Das Gestell kann jedoch beispielsweise auch an einem Ende des Silos abgestellt oder vom Nutzfahrzeug gehalten werden und die Abdeckplane dann manuell abgewickelt werden.

Die Abdeckplane kann insbesondere dazu ausgebildet sein, den Silo luftdicht abzudecken. Dadurch können Gärprozesse in den im Silo gelagerten Futtermitteln ausgelöst werden.

Dadurch kann eine Konservierung erreicht werden.

Vorzugsweise weist die Rolle eine Anzahl von Einhängelaschen zum lösbaren Befestigen der Abdeckplane auf. Dies ermöglicht ein einfaches Befestigen der Abdeckplane an der Rolle.

Die Einhängelaschen sind vorzugsweise entlang einer Linie angeordnet, welche zu einer Längsachse der Rolle parallel ist. Dies ermöglicht ein einfaches Einhängen einer typischerweise geraden Kante der Abdeckplane.

Bevorzugt ist einer Anzahl der Einhängelaschen eine jeweilige Sicherung zugeordnet, welche eine Lösung der Abdeckplane erschwert. Als besonders vorteilhaft hat es sich herausgestellt, wenn jeder zweiten Einhängelasche entlang einer Linie eine solche Sicherung zugeordnet ist. Es kann jedoch beispielsweise auch jeder Einhängelasche eine jeweilige Sicherung zugeordnet sein. Die jeweilige Sicherung kann insbesondere umfangsmäßig beabstandet neben der Einhängelasche auf der Außenfläche der Rolle angeordnet sein. Die Erschwernis kann insbesondere im Vergleich zu einem Zustand ohne Sicherung betrachtet werden.

Die Sicherungen können insbesondere als Federstahl-Sicherungen ausgeführt sein. Diese ermöglichen eine gewisse Flexibilität zum Einhängen und Entfernen der Abdeckplane, verhindern jedoch ein ungewolltes Entfernen der Abdeckplane.

Die Rolle kann insbesondere auch dazu ausgebildet sein, die Abdeckplane entlang einer vollständigen Breite der Abdeckplane aufzunehmen. Dadurch kann die Abdeckplane ohne Schlaufen oder mehrlagige Bereiche auf der Rolle aufgenommen werden.

Besonders bevorzugt ist die Rolle in dem Gestell lösbar gelagert. Dies ermöglicht es, die Rolle in einer Position neben dem Silo aus dem Gestell zu entnehmen und neben dem Silo zu lagern. Das Gestell kann dann für andere Aufgaben verwendet werden, beispielsweise um weitere Silos abzudecken. Dadurch kann vermieden werden, dass das Gestell beim Silo verbleiben muss, um die Abdeckplane auf dem Silo zu belassen bzw. um eine Möglichkeit vorzusehen, die Abdeckplane auch nach dem Aufbringen auf den Silo aufzurollen oder abzuwickeln. Letzteres kann gegebenenfalls dadurch erfolgen, dass die Rolle temporär wieder in das Gestell aufgenommen wird.

Die Rolle kann insbesondere auch aus dem Gestell entnehmbar sein. Dadurch werden ebenfalls die gerade beschriebenen Vorteile erreicht.

Vorzugsweise ist an dem Gestell ein Motor zum rotierenden Antrieb der Rolle angebracht. Dadurch kann die Abdeckplane automatisiert abgewickelt oder aufgewickelt werden. Es sei jedoch erwähnt, dass alternativ auch ein manueller Antrieb vorgesehen sein kann, beispielsweise mittels einer Kurbel.

Bei dem Motor kann es sich insbesondere um einen Hydraulikmotor handeln. Dies hat sich für die Praxis bewährt. Es sei jedoch erwähnt, dass auch andere Arten von Motoren verwendet werden können, beispielsweise ein Elektromotor oder ein Pneumatikmotor.

Der Motor kann insbesondere dazu ausgebildet sein, von dem Nutzfahrzeug mit Energie versorgt zu werden. Beispielsweise kann der Motor vom Nutzfahrzeug elektrisch mit Energie versorgt werden und hierzu an ein entsprechendes Bordnetz des Nutzfahrzeugs angeschlossen werden. Bei einem Hydraulikmotor kann der Motor beispielsweise von dem Nutzfahrzeug mit druckbeaufschlagtem Hydraulikfluid versorgt werden.

Der Motor kann insbesondere mit der Rolle über eine Kupplung verbunden sein. Dies ermöglicht eine gewisse Flexibilität bei der Verbindung.

Die Kupplung kann insbesondere ein Kupplungsspiel aufweisen. Dadurch können eventuelle Ungenauigkeiten bei der Anbringung oder Verformungen aufgrund von im Betrieb auftretenden Kräften ausgeglichen werden.

Die Rolle kann beispielsweise eine Länge zwischen 6 m und 8 m haben. Insbesondere kann sie eine Länge von 7 m haben. Dies entspricht in etwa typischen Breiten von Abdeckplanen für typischerweise in der Landwirtschaft verwendete Silos.

Die Rolle kann mittels einer Anzahl von Kugellagern in dem Gestell gelagert sein. Dies hat sich als reibungsarme und zuverlässige Lagerung bewährt.

Die Kugellager können insbesondere mit dem Gestell verschraubt sein. Dies ermöglicht ein einfaches Austauschen.

Der Motor und/oder die Kupplung können auch mittels Passfedern am Gestell angebracht sein. Dies ermöglicht eine gewisse Flexibilität zur Aufnahme von im Betrieb auftretenden Kräften.

Die Erfindung betrifft des Weiteren einen Silo, insbesondere einen Flachsilo oder einen Fahrsilo, welcher mittels einer Abdeckplane eines Siloabdecksystems gemäß der Erfindung abgedeckt ist. Hinsichtlich des Siloabdecksystems kann auf alle hierin beschriebenen Ausführungen und Varianten zurückgegriffen werden.

Die weiter oben beschriebenen Vorteile eines erfindungsgemäßen Siloabdecksystems können bei dem erfindungsgemäßen Silo erreicht werden.

Bei dem Silo kann insbesondere das Gestell einschließlich der Rolle neben dem Silo abgestellt sein. Dies ermöglicht es, jederzeit ohne weitere aufwändige Maßnahmen die Abdeckplane auf die Rolle aufzurollen oder von ihr abzuwickeln. Dadurch kann beispielsweise durch Aufrollen der Abdeckplane auf die Rolle ein Stück des Silos freigegeben werden, um Futtermittel zu entnehmen. Soll anschließend wieder ein Teil des Silos abgedeckt werden, kann die Abdeckplane einfach wieder von der Rolle abgerollt werden.

Die Rolle kann auch vom Gestell gelöst sein und neben dem Silo abgelegt werden. In diesem Fall kann das Gestell vom Silo entfernt und beispielsweise zum Abdecken eines anderen Silos verwendet werden.

Die Rolle kann auch im Gestell aufgewickelt werden, um den Silo ganz oder teilweise freizulegen. Dies kann beispielsweise mittels des weiter oben erwähnten Motors oder auch manuell erfolgen.

Der Silo kann insbesondere durch eine Wand begrenzt sein. Dabei kann es sich insbesondere um eine Betonwand oder um eine gemauerte Wand handeln.

Die Wand kann insbesondere von einem Untergrund umgeben sein. Dabei kann es sich insbesondere um Erde handeln. Dies entspricht typischen und bewährten Ausführungen eines Silos.

Die Erfindung betrifft des Weiteren ein Verfahren zum Abdecken eines Silos, insbesondere eines Fahrsilos oder Flachsilos, unter Verwendung eines erfindungsgemäßen Siloabdecksystems. Dabei kann es sich beispielsweise um einen erfindungsgemäßen Silo handeln. Hinsichtlich des erfindungsgemäßen Siloabdecksystems und des erfindungsgemäßen Silos kann auf alle hierin beschriebenen Ausführungen und Varianten zurückgegriffen werden.

Bei dem erfindungsgemäßen Verfahren wird insbesondere der Silo mit der Abdeckplane des Siloabdecksystems abgedeckt. Anschließend kann gemäß einer Ausführung das Gestell neben dem Silo verbleiben. Gemäß einer anderen Ausführung kann auch die Rolle aus dem Gestell entnommen werden und neben dem Silo verbleiben, so dass das Gestell abtransportiert und beispielsweise für einen anderen Silo verwendet werden kann.

Verbleibt das Gestell samt Rolle neben dem Silo, so kann die Abdeckplane bei Bedarf aufgerollt oder abgewickelt werden. Verleibt lediglich die Rolle neben dem Fahrsilo, so kann diese insbesondere bei Bedarf wieder in ein Gestell aufgenommen werden und dann entsprechend abgerollt oder aufgerollt werden.

In diesem Zusammenhang wird insbesondere darauf hingewiesen, dass alle im Bezug Vorrichtungen beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar sind und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung insbesondere in Ausführungsbeispielen schematisch dargestellt. Es zeigen:
- Fig. 1:: eine perspektivische Ansicht eines Siloabdecksystems,
- Fig. 2:: einen Ausschnitt des Siloabdecksystems,
- Fig. 3:: einen Teil des Siloabdecksystems in einer Schnittansicht,
- Fig. 4:: einen weiteren Teil des Siloabdecksystems in einer Schnittansicht,
- Fig. 5:: eine Draufsicht auf das Siloabdecksystem,
- Fig. 6:: eine Seitenansicht auf eine Breitseite des Siloabdecksystems,
- Fig. 7:: einen weiteren Teil des Siloabdecksystems in einer Schnittansicht,
- Fig. 8:: einen weiteren Teil des Siloabdecksystems in einer Schnittansicht,
- Fig. 9:: ein Gestell des Siloabdecksystems in separater perspektivischer Ansicht,
- Fig. 10:: eine Schnittansicht durch eine Rolle des Siloabdecksystems,
- Fig. 11:: eine Draufsicht auf einen Silo,
- Fig. 12:: eine Schnittansicht durch den Silo,
- Fig. 13:: eine Draufsicht auf einen abgedeckten Silo, und
- Fig. 14:: eine Schnittansicht durch den abgedeckten Silo.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

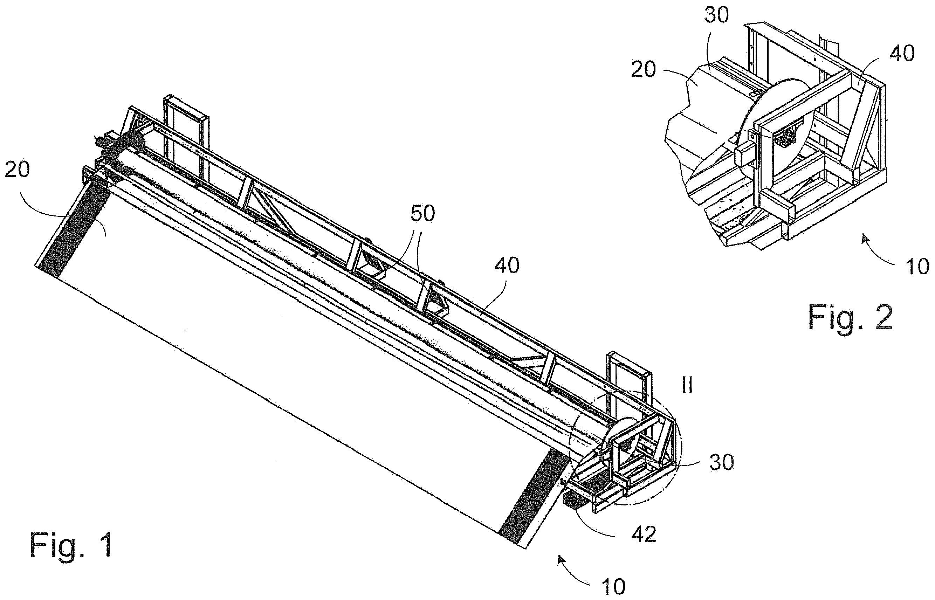

Fig. 1 zeigt ein Siloabdecksystem 10 gemäß einem Ausführungsbeispiel der Erfindung.

Das Siloabdecksystem 10 weist eine Abdeckplane 20 auf, welche dazu ausgebildet ist, einen Silo luftdicht abzudecken. Bei der Abdeckplane 20 handelt es sich um eine stabile und wetterfeste Plane, wobei hier auf bewährte Ausführungen zurückgegriffen werden kann.

Das Siloabdecksystem 10 weist eine Rolle 30 auf. Die Abdeckplane 20 ist an der Rolle 30 befestigt, worauf weiter unten noch näher eingegangen wird.

Das Siloabdecksystem 10 weist ferner ein Gestell 40 auf, in welchem die Rolle 30 drehbar gelagert ist. Dadurch kann die Rolle 30 in dem Gestell 40 gedreht werden, wodurch die Abdeckplane 20 auf- und abgewickelt werden kann.

Die Rolle 30 ist des Weiteren aus dem Gestell 40 entnehmbar ausgebildet. Somit kann die Rolle 30 auch separat vom Gestell 40 gelagert werden.

An dem Gestell 40 sind Auflageelemente 42 seitlich angebracht, mit welchen das Gestell 40 auf einem Untergrund abgelegt werden kann. Insbesondere kann es dadurch auf einem Untergrund neben einem Silo abgelegt werden.

An dem Gestell 40 sind des Weiteren Befestigungselemente 50 angebracht. Mit diesen kann das Gestell 40 an einem Nutzfahrzeug wie beispielsweise einem typischen landwirtschaftlichen Traktor befestigt werden. Dadurch kann das Gestell 40 einfach aufgenommen und bewegt werden.

Fig. 2 zeigt eine Detailansicht des mit II markierten Bereichs von Fig. 1. Dabei ist insbesondere zu sehen, wie die Rolle 30 in dem Gestell 40 gelagert ist. Hierauf wird weiter unten noch näher eingegangen werden.

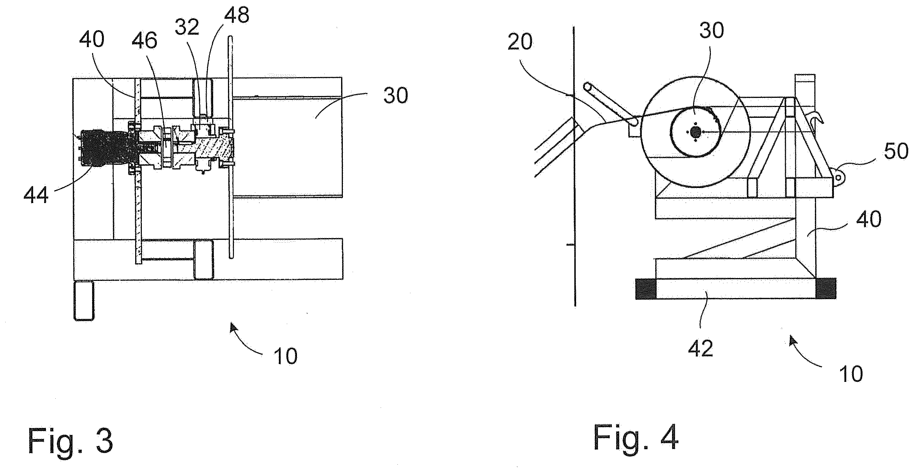

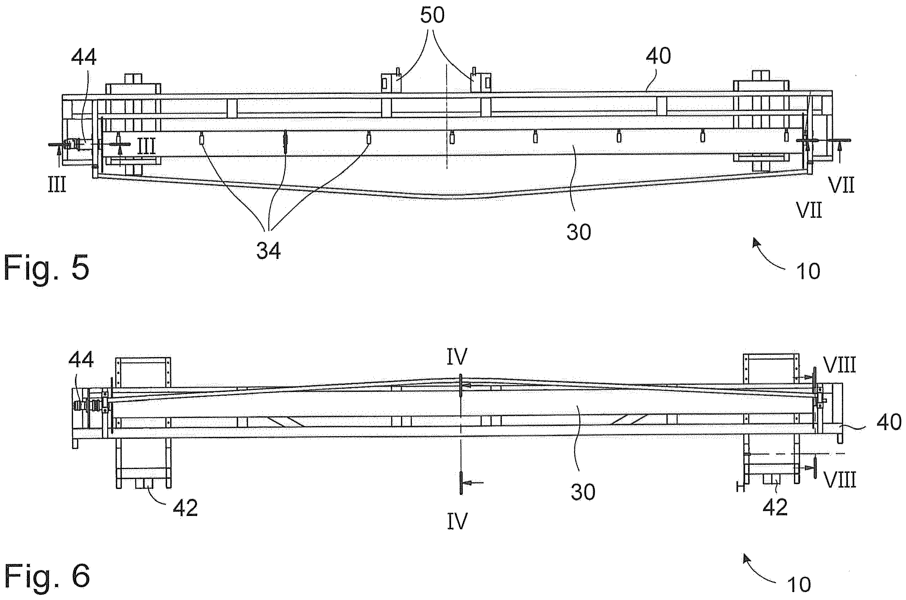

Fig. 3 zeigt eine Schnittansicht durch einen Teil der Siloabdeckvorrichtung 10. Die Schnittebene ist in Fig. 5 mit der Markierung III-III eingezeichnet.

Wie in Fig. 3 zu erkennen ist, weist die Siloabdeckvorrichtung 10 einen Motor 44 auf. Dabei handelt es sich vorliegend um einen Hydraulikmotor. Der Motor 44 ist mittels einer Kupplung 46 mit der Rolle 30 verbunden. Die Kupplung 46 weist ein gewisses Kupplungsspiel auf, so dass Deformationen aufgrund von Kräften, welche im Betrieb auftreten, kompensiert werden können.

Die Rolle 30 ist zunächst in einem Kugellager 32 gelagert, welches dann wiederum an dem Gestell 40 mittels einer Passfeder 48 befestigt ist. Auch damit kann eine gewisse Deformierbarkeit erreicht werden, welche Beschädigungen aufgrund von auftretenden Kräften verhindert.

Fig. 4 zeigt eine Schnittansicht durch einen mittleren Teil der Siloabdeckvorrichtung 10. Die Schnittebene ist in Fig. 6 mit der Markierung IV-IV eingezeichnet. Auch dahinter liegende Teile sind teilweise zu erkennen.

Dabei ist zu erkennen, dass sich die Abdeckplane 20 vorliegend an der oberen Seite von der Rolle 30 abwickelt. Es sei jedoch erwähnt, dass sich die Abdeckplane 20 beispielsweise auch an der unteren Seite von der Rolle 30 abwickeln kann.

Fig. 5 zeigt eine Draufsicht auf die Siloabdeckvorrichtung 10. Dabei ist zu erkennen, dass auf der Rolle 30 eine Mehrzahl von Einhängelaschen 34 angebracht sind. Diese sind entlang einer Linie angeordnet, welche parallel zu einer Längsachse der Rolle 30 liegt. An diesen Einhängelaschen 34 kann die Abdeckplane 30 befestigt werden, so dass sie auf die Rolle 30 aufgewickelt werden kann. Auf die genaue Ausgestaltung wird weiter unten noch näher eingegangen werden.

Fig. 6 zeigt eine Seitenansicht der Siloabdeckvorrichtung 10. Dabei ist insbesondere zu erkennen, dass die beiden Auflageelemente 42 seitlich angeordnet sind, um das Gestell 30 auf einen Untergrund aufzulegen.

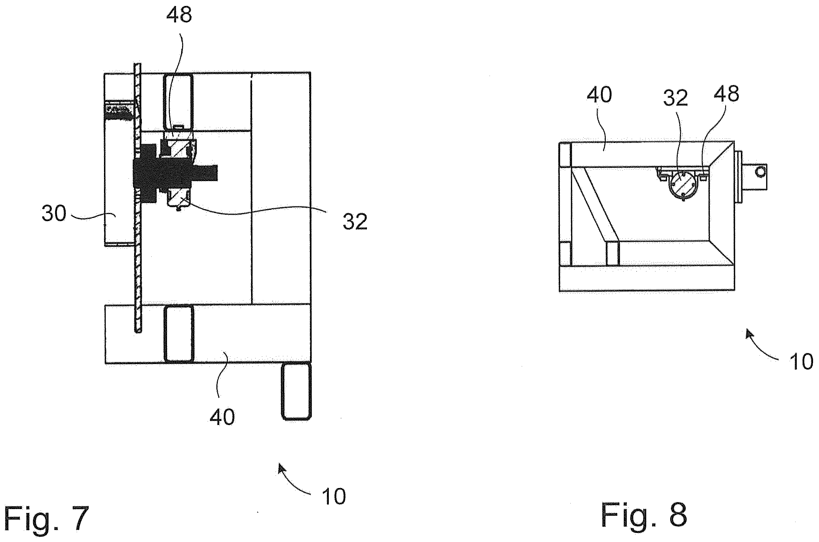

Fig. 7 zeigt eine Schnittansicht durch einen Teil der Siloabdeckvorrichtung 10. Die Schnittebene ist in Fig. 5 mit der Markierung VII-VII eingezeichnet.

Dabei ist zu erkennen, dass die Rolle 30 auf der dem Motor 44 gegenüberliegenden Seite in einem Kugellager 32 gelagert ist, welches wiederum mit einer Passfeder 48 am Gehäuse 40 befestigt ist. Dadurch wird auch an dieser Seite eine begrenzt elastische Lagerung erzielt, welche Deformationen aufgrund von im Betrieb auftretenden Kräften aufnehmen kann.

Fig. 8 zeigt eine Schnittansicht durch einen weiteren Teil der Siloabdeckvorrichtung 10. Die Schnittebene ist mit der Markierung VIII-VIII in Fig. 6 eingezeichnet.

Dabei sind das bereits in Fig. 7 erwähnte Kugellager 32 sowie die Passfeder 48, mit welchen das Kugellager 32 am Gestell 40 angebracht ist, gezeigt.

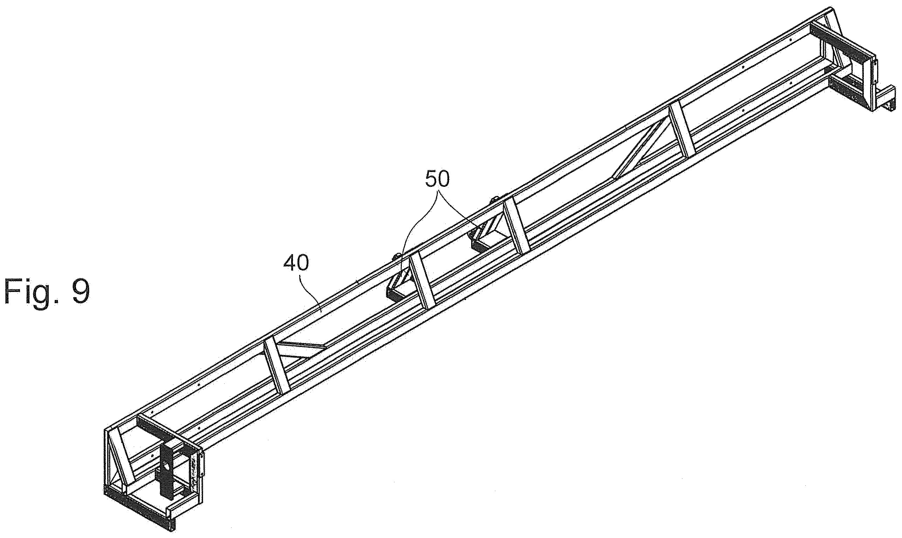

Fig. 9 zeigt das Gestell 40 mit den Befestigungselementen 50 in einer perspektivischen Ansicht ohne weitere Komponenten. Dabei ist insbesondere die Struktur des Gestells 40 deutlich zu sehen.

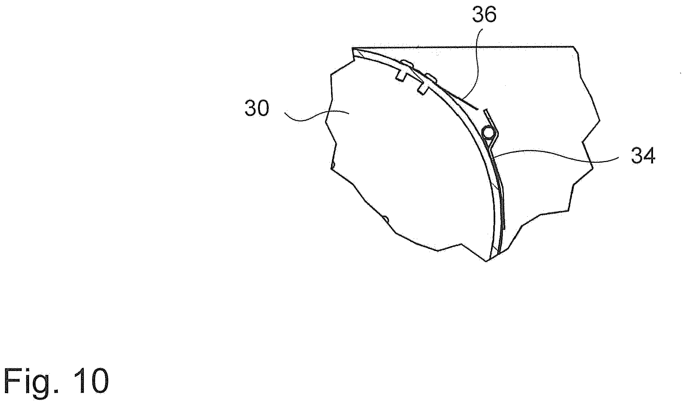

Fig. 10 zeigt eine Schnittansicht durch die Rolle 30 quer zu deren Längsachse.

Wie bereits erwähnt, sind auf die Oberfläche der Rolle 30 Einhängelaschen 34 aufgebracht. Dabei kann die Abdeckplane 20 in die Einhängelaschen 34 eingebracht werden. In der Schnittansicht von Fig. 10 ist eine solche Einhängelasche 34 gezeigt.

Der Einhängelasche 34 ist eine Sicherung 36 in Form einer Federstahl-Sicherung zugeordnet. Diese ist wie gezeigt umfangsmäßig beabstandet zur Einhängelasche 34 angeordnet. Die Sicherung 36 verhindert, dass die Abdeckplane 20 unbeabsichtigt aus der Einhängelasche 34 entfernt wird.

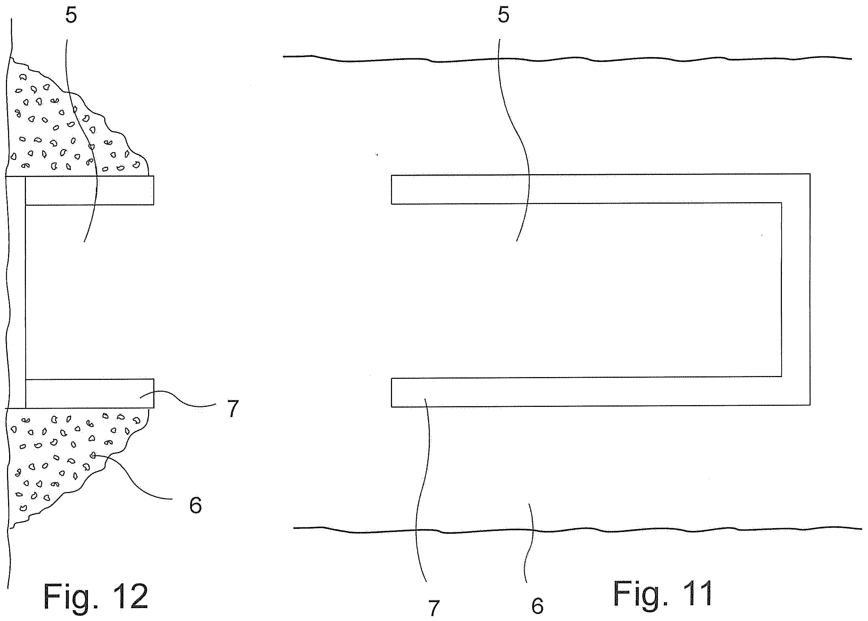

Fig. 11 zeigt einen Silo 5 in einer Draufsicht. Der Silo 5 ist durch eine Wand 7 begrenzt. Dabei handelt es sich vorliegend um eine Betonwand.

Der Silo 5 bzw. dessen Wand 7 ist von einem Untergrund 6 umgeben. Dabei handelt es sich vorliegend um Erde.

Wie gezeigt hat die Wand 7 eine U-förmige Form in der gezeigten Draufsicht. Somit kann der Silo 5 von einer Seite aus beladen werden, was üblicherweise mit landwirtschaftlichen Nutzfahrzeugen wie Traktoren erfolgt. Die durch die Wand 7 begrenzte Fläche kann dabei insbesondere mit Futtermitteln gefüllt werden.

Fig. 12 zeigt den Silo 11 in einer Schnittansicht. Dabei ist zu sehen, dass der Untergrund 6 neben der Wand 7 aufgeschüttet ist und der Bereich des Silos 5 innerhalb der Wand 7 frei bleibt. Der Silo 5 ist somit vorliegend nicht befüllt.

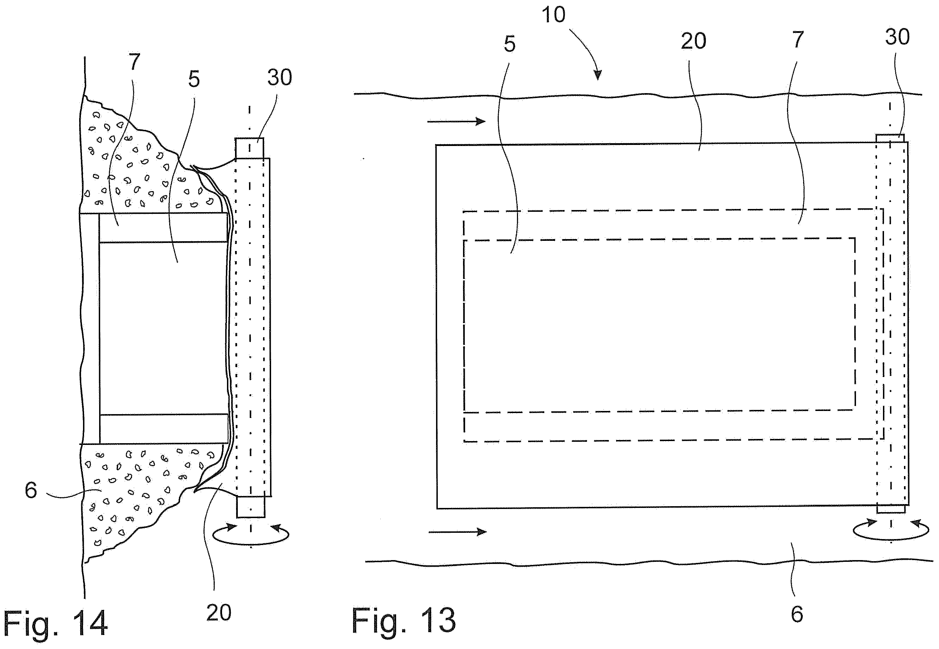

Fig. 13 zeigt den Silo 5 ebenfalls in einer Draufsicht, wobei er durch eine Siloabdeckvorrichtung 10 gemäß einem Ausführungsbeispiel der Erfindung abgedeckt ist. Es handelt sich somit um einen Silo 5 gemäß einem Ausführungsbeispiel der Erfindung.

Wie gezeigt überdeckt die Abdeckplane 20 der Siloabdeckvorrichtung 10 den Silo 5. Die Rolle 30 ist dabei neben dem Silo 5 abgelegt, so dass sie zur Beschwerung und Stabilisierung dient. Die Rolle 30 kann jederzeit in ein Gestell 40 aufgenommen werden, um die Abdeckplane 20 aufzurollen oder abzuwickeln. Somit kann jederzeit die Abdeckplane 20 etwas zurückgezogen werden, um Futtermittel aus dem Silo 5 zu entnehmen.

Fig. 14 zeigt den Silo 5 von Fig. 13 in einer Schnittansicht. Dabei ist insbesondere zu erkennen, wie die Abdeckplane 20 auf der Wand 7 aufliegt und auch etwas auf dem Untergrund 6 aufliegt, so dass ein weitgehend luftdichter Abschluss entsteht.

In den Fig. 13 und 14 sind auch die Drehrichtungen der Rolle 30 sowie eine mögliche Bewegungsrichtung der Abdeckplane 20 beim Aufrollen auf die Rolle 30 gezeigt. Diese sind durch Pfeile eingezeichnet.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Siloabdecksystem, aufweisend
- eine Abdeckplane (20), welche dazu ausgebildet ist, einen Silo (5), insbesondere einen Flachsilo oder Fahrsilo, abzudecken,
- eine Rolle (30), an welcher die Abdeckplane (20) lösbar befestigt ist, um die Abdeckplane (20) auf- und abzurollen, und
- ein Gestell (40), in welchem die Rolle (30) drehbar gelagert ist,
- wobei das Gestell (40) zumindest ein Auflageelement (42) zum Ablegen des Gestells (40) auf einem Untergrund (6) neben dem Silo (5) aufweist, und
- wobei das Gestell (40) ein Befestigungselement (50) zum lösbaren Befestigen des Gestells (40) an einem Nutzfahrzeug aufweist.

2. Siloabdecksystem nach Anspruch 1, **dadurch gekennzeichnet, dass** die Abdeckplane (20) dazu ausgebildet, ist, den Silo (5) luftdicht abzudecken.

3. Siloabdecksystem nach einem der vorhergehenden Ansprüche, **dadurch gekennzeichnet, dass** die Rolle (30) eine Anzahl von Einhängelaschen (34) zum lösbaren Befestigen der Abdeckplane (20) aufweist.

4. Siloabdecksystem nach einem der vorhergehenden Ansprüche, **dadurch gekennzeichnet, dass** die Einhängelaschen (34) entlang einer Linie angeordnet sind, welche zu einer Längsachse der Rolle (30) parallel ist und/oder eine Anzahl der Einhängelaschen (34), insbesondere jeder zweiten Einhängelasche (34) entlang einer Linie, eine jeweilige Sicherung (36) zugeordnet ist, welche eine Lösung der Abdeckplane (20) erschwert.

5. Siloabdecksystem nach einem der vorhergehenden Ansprüche, **dadurch gekennzeichnet, dass** die Sicherungen (36) als Federstahl-Sicherungen ausgeführt sind.

6. Siloabdecksystem nach einem der vorhergehenden Ansprüche, **dadurch gekennzeichnet, dass** die Rolle (30) dazu ausgbildet ist, die Abdeckplane (20) entlang einer vollständigen Breite der Abdeckplane (20) aufzunehmen.

7. Siloabdecksystem nach einem der vorhergehenden Ansprüche, **dadurch gekennzeichnet, dass** die Rolle (30) in dem Gestell (40) lösbar gelagert ist und/oder die Rolle (30) aus dem Gestell (40) entnehmbar ist.

8. Siloabdecksystem nach einem der vorhergehenden Ansprüche, **dadurch gekennzeichnet, dass** an dem Gestell (40) ein Motor (44) zum rotierenden Antrieb der Rolle (30) angebracht ist.

9. Siloabdecksystem nach einem der vorhergehenden Ansprüche, **dadurch gekennzeichnet, dass** der Motor (44) ein Hydraulikmotor ist und/oder der Motor (44) dazu ausgebildet ist, von dem Nutzfahrzeug mit Energie versorgt zu werden und/oder der Motor (44) mit der Rolle (30) über eine Kupplung (46) verbunden ist.

10. Siloabdecksystem nach einem der vorhergehenden Ansprüche, **dadurch gekennzeichnet, dass** die Kupplung (46) ein Kupplungsspiel aufweist.

11. Siloabdecksystem nach einem der vorhergehenden Ansprüche, **dadurch gekennzeichnet, dass** die Rolle (30) eine Länge zwischen 6 m und 8 m, insbesondere 7 m, aufweist und/oder die Rolle (30) mittels einer Anzahl von Kugellagern (32) in dem Gestell (40) gelagert ist.

12. Siloabdecksystem nach einem der vorhergehenden Ansprüche, **dadurch gekennzeichnet, dass** die Kugellager (32) mit dem Gestell (40) verschraubt sind.

13. Siloabdecksystem nach einem der vorhergehenden Ansprüche, **dadurch gekennzeichnet, dass** der Motor (44) und/oder die Kupplung (46) mittels Passfedern (48) am Gestell (40) angebracht sind.

14. Silo, insbesondere Flachsilo oder Fahrsilo, welcher mittels einer Abdeckplane (20) eines Siloabdecksystems (10) nach einem der vorhergehenden Ansprüche abgedeckt ist.

15. Silo nach Anspruch 14, **dadurch gekennzeichnet, dass** das Gestell (40) einschließlich der Rolle (30) neben dem Silo (5) abgestellt ist und/oder die Rolle (30) vom Gestell (40) gelöst ist und neben dem Silo (5) abgelegt ist und/oder die Rolle (30) im Gestell (40) aufgewickelt wird, um den Silo (5) ganz oder teilweise freizulegen.
